# EUROPÄISCHE PATENTSCHRIFT

(11) **EP 0 663 650 B1**
(45) Veröffentlichungstag und Bekanntmachung des Hinweises auf die Patenterteilung: **05.11.2003**
(21) Anmeldenummer: 94118963.1
(22) Anmeldetag: 01.12.1994
(51) Int. Cl.: G06K 19/073, E05B 49/00

(54) **Verfahren zur Zuordnung eines mobilen Datenträgers zu einer stationären Datenstation**
Method for allocating a mobile record carrier to a fixed data station
Méthode à attribuer à un porteur mobile d'information à une station fixe

(30) Priorität: 14.12.1993 DE 4342641
(43) Veröffentlichungstag der Anmeldung: 19.07.1995
(73) Patentinhaber: Infineon Technologies AG, 81669 München (DE)
(72) Erfinder: Reiner, Robert, D-82008 Unterhaching (DE)
(74) Vertreter: Fischer, Volker, Dipl.-Ing.

(56) Entgegenhaltungen:
- WO-A-90/15211
- DE-A- 4 020 445
- FR-A- 2 507 359
- US-A- 3 761 683
- US-A- 4 213 118

## Beschreibung

Die Erfindung betrifft ein Verfahren zur Zuordnung eines mobilen Datenträgers zu einer stationären Datenstation gemäß dem Oberbegriff des Anspruchs 1.

Ein derartiges Verfahren findet z.B. bei elektronischen Schlüssel-Schloßsystemen Anwendung. Insbesondere kann ein derartiges Verfahren bei einer Kfz-Wegfahrsperre zum Einsatz kommen, bei der der mobile Datenträger sich innerhalb des Zündschlüssels befindet und die stationäre Datenstation z.B. in der Motorsteuerung untergebracht ist. Die Versorgung des Schlüssels mit der Betriebsleistung und Daten kann z.B. auf induktivem Weg erfolgen. Dazu wird um das Zündschloß eine Spule angebracht, die mit einem Kondensator einen Resonanzkreis bildet. Das Schloß besteht aus einem Schließzylinder, aus einer Bronzelegierung und einer Halterung aus einem Druckgußmetall. Der Schlüssel enthält ebenfalls eine Spule, die Teil eines Resonanzkreises ist, der auf den Resonanzkreis des Schlosses abgestimmt ist.

Die Authentifikation selbst kann bei derartigen Systemen über bekannte Kryptoalgorithmen, wie sie z.B. bei Chipkarten verwendet werden, erfolgen.

Insbesondere im Kfz-Bereich sind jedoch die Sicherheitsforderungen, besonders die der Kfz-Versicherer, sehr hoch.

So gilt es zu verhindern, daß nichtberechtigte Personen in der Lage sind, zulässige Schlüssel nachzubilden, indem sie z.B. den Schlüssel dekodieren oder den Datenverkehr zwischen Schlüssel und Schloß "abhören", um so zu den gewünschten geheimen Daten zu gelangen.

Aus der WO-A-90/15211, von der im Oberbegriff des Patentanspruchs 1 ausgegangen ist, ist eine Kombination aus Schlüssel und Schloß bekannt, wobei ebenfalls die Zündung eines Fahrzeugs gesichert wird. Hierbei wird der Datenverkehr mittels Verschlüsselung gesichert.

In der DE-A-4020445 ist ebenfalls ein ähnliches Verfahren beschrieben.

Aufgabe der vorliegenden Erfindung ist es ein Verfahren zur Zuordnung eines mobilen Datenträgers zu einer stationären Datenstation anzugeben, das einem hohen Sicherheitsstandard entspricht.

Diese Aufgabe wird durch die Merkmale des Anspruchs 1 gelöst. Weiterbildungen sind Gegenstand der Unteransprüche.

Das erfindungsgemäße Verfahren findet Anwendung in einem System bestehend aus Schlüssel und Schloß. Der Schlüssel enthält einen mobilen Datenträger, der mit einer stationären Datenstation, dem Schloß, Daten austauschen kann. Ebenso versorgt die stationäre Datenstation den mobilen Datenträger mit einer Versorgungsspannung. Energie und Datenübertragung können z.B. auf induktiven Weg erfolgen.

Der mobile Datenträger kann eine Vielzahl von geschützten und nicht geschützten Speicherbereichen aufweisen. Der Aufbau des Speichers des mobilen Datenträgers kann dabei beispielsweise folgendermaßen aussehen:

In einem ersten ungeschützten Speicherbereich kann eine Identifikationsnummer, z.B. vom Kfz-Hersteller, eingeschrieben werden. Dieser dient später der Unterscheidung von z.B. n verschiedenen Schlüssel pro Fahrzeug und/oder anderen Zwecken nach Belieben des Fahrzeugherstellers.

Ein zweiter Speicherbereich enthält eine Zufallszahl, die gegenüber Schreiben geschützt ist. Diese dient dazu, den Schlüsselrohling im Fall der Verwendung als Ersatzschlüssel für das elektronische Schloß vom Originalschlüssel unterscheidbar zu machen. Diese Zufallszahl wird bereits beim Halbleiterhersteller programmiert und ist gegenüber Schreiben geschützt, kann also weder vom Kfz-Hersteller noch von berechtigten bzw. unberechtigten Personen überschrieben werden.

In einem weiteren Speicherbereich kann ein Frequenzabgleichwert für das Schlüsselmodul abgespeichert werden. Dieses wird erst beim Endtest beschrieben und kann evtl. gegen Überschreiben geschützt werden, wenn dies als vorteilhaft angesehen wird. In einem weiteren Speicherbereich kann das Teilerverhältnis zwischen Tragerfrequenz und Baudrahte abgespeichert werden. Dieser Bereich kann entweder beim Halbleiterhersteller oder beim Kfz-Hersteller beschrieben werden.

Vom Chip aus muß sichergestellt sein, daß das zusammengebaute Modul, d.h. der Schlüssel mit dem darin integrierten mobilen Datenträger, mit einer definierten Baudrate angesprochen werden kann. Das kann beispielsweise dadurch geschehen, daß entweder von der Scheibenherstellung her ein bestimmter Wert in den Speicherbereich für das Teilerverhältnis abgespeichert worden ist und diesem Wert, der z.B. 00H oder FFH sein kann, schaltungsmäßig ein geeignetes Verhältnis zugeordnet ist, oder daß bei der Scheibenmessung z.B. über extra Pads dieser Wert eingeschrieben wird. Bei der Endmessung des Moduls wird dann der für den Kfz-Hersteller notwendige Wert eingeschrieben und kann dann auch gegenüber Schreiben geschützt werden, wenn dies als vorteilhaft angesehen wird.

Ein weiterer Speicherbereich ist vorgesehen, in dem später der Geheimcode gespeichert wird. Dieser Bereich ist derart ausgestattet, daß er nicht von außen lesbar ist und nur schreibbar, nachdem eine erfolgreiche Authentifikation stattgefunden hat. Bei der Auslieferung z.B. an den Kfz-Hersteller muß er einen Wert enthalten, der dem Kunden bekannt ist, weil nur mit Kenntnis dieses Wertes ein Schreiben in dem Bereich möglich ist. Ein Lesen ist wie bereits erwähnt nie möglich. Dies kann dadurch geschehen, daß entweder von der Scheibenherstellung her ein bestimmter Wert in den Bytes des geheimen Speicherbereichs vorhanden ist, z.B. 00H oder FFH, oder daß bei der Scheibenmessung z.B. über extra Pads dieser Wert eingeschrieben wird.

Eine weitere Möglichkeit wäre, die einzelnen Chips mit einem individuell vereinbarten Transportcode für eine Lieferung zu schützen. Wenn die Lieferung verloren geht, kann der unbekannte Finder mit den Modulen bzw. Rohschlüsseln nichts anfangen, da der Inhalt des geheimen Speicherbereichs nicht bekannt ist.

Da Schlüssel und Schloß, bzw. mobiler Datenträger und stationäre Datenstation erst beim Kunden, z.B. dem Kfz-Hersteller, zusammenkommen, muß dieser die einzelnen Schlüssel dem jeweiligen elektronischen Schloß zuordnen und initialisieren. So muß z.B. in den ersten Speicherbereich eingeschrieben werden, um welchen Fahrzeugschlüssel es sich handelt. Ebenso müssen die Bereiche für das Verhältnis zwischen Trägerfrequenz und Baudrate eingeschrieben werden. Schließlich folgt der dem jeweiligen Schloß zugehörige individuelle Geheimcode für den Schlüssel.

Im elektronischen Schloß, d.h. der stationären Datenstation, muß für jeden zugeordneten Schlüssel der jeweilige Datensatz des Schlüssels gespeichert werden. Dieser Datensatz besteht aus der Identifikationsnummer, der in dem geschützten Speicherbereich abgelegten Zufallszahl sowie dem individuellen Geheimcode in dem nicht lesbaren Speicherbereich.

Für nicht ausgelieferte Schlüssel können auch diese Daten eingeschrieben werden, als würden diese Schlüssel existieren. Dann können später zusätzliche Schlüssel bestellt werden, als wären sie die Ersatzschlüssel.

Außerdem muß der Kfz-Hersteller diese Inhalte dokumentieren, um später die Informationen für Ersatzschlüssel oder den Ersatz der Steuergeräte, die das elektronische Schloß, also die stationäre Datenstation, enthalten, zu ermöglichen.

Die eigentliche Authentifikation kann über bekannte Kryptoalgorithmen erfolgen. Hierzu kann z.B. eine von der stationären Datenstation an den mobilen Datenträger gesendete Zufallszahl durch einen Kryptoalgorithmus im mobilen Datenträger mittels des Geheimcodes verschlüsselt werden. Das Ergebnis dieser Berechnung kann zusammen mit dem Identifikationscode des Schlüssels, der aus der Identifikationsnummer, also der Schlüsselnummer, und der Zufallszahl besteht, an die stationäre Datenstation zurück übermittelt werden. Diese berechnet mit dem gleichen Kryptoalgorithmus und dem Geheimcode das Ergebnis und vergleicht dieses mit dem vom mobilen Datenträger übermittelten. Es wird also nie der Geheimcode selbst übermittelt und kann somit auch nicht von einer unberechtigten Person abgehört werden. Stimmen beide miteinander überein, so handelt es sich um einen gültigen Schlüssel bzw. mobilen Datenträger.

In einem weiteren Schritt kann nun anhand der Schlüsselnummer und der Zufallszahl überprüft werden, ob der Schlüssel bei der Initialisierung der stationären Datenstation abgespeichert wurde. Ist dies der Fall, so wird das Schloß freigegeben, und die daran angeschlossene Wegfahrsperre deaktiviert.

Wenn ein Schlüssel verloren, gestohlen oder zerstört würde, kann man einen Ersatzschlüssel anfertigen lassen. Dabei wird erfindungsgemäß automatisch der alte Schlüssel ungültig. Der Schutz gegen Diebstahl ist daher auch im Fall eines gestohlenen Schlüssels wieder herzustellen.

Der Kunde meldet sich in einer Ersatzschlüsselwerkstatt und weist sich dort aus. Er gibt an, welchen Schlüssel er verloren hat, wenn er das weiß, ansonsten wird eine Schlüsselnummer angenommen. Die Ersatzschlüsselwerkstatt frägt bei der Ersatzschlüsselzentrale des Kraftfahrzeugherstellers nach dem Geheimnis des verlorenen Schlüssels. Dieser Datenverkehr muß geschützt abgewickelt werden. Die Werkstatt fräst den Bart des Schlüssels und programmiert die Schlüsselnummer im ungeschützten Speicherbereich, sowie den alten vom Kfz-Hersteller übermittelten Geheimcode in den entsprechenden Speicherzellen des mobilen Datenträgers.

Der Kunde erhält den Schlüssel und begibt sich zu seinem Fahrzeug. Dort wendet er den Ersatzschlüssel an. Das Schloß, d.h. die stationäre Datenstation, stellt nun fest, daß der Schlüssel den richtigen Geheimcode enthält, er also berechtigt ist, daß aber die im geschützten Speicherbereich abgespeicherte Zufallszahl nicht in seinem Speicherbereich abgespeichert ist, da es sich um einen neuen Schlüssel mit einer neuen bisher nicht bekannten Zufallszahl handelt. Daraufhin generiert und programmiert das elektronische Schloß einen neuen Geheimcode in den Schlüssel. Außerdem macht die stationäre Datenstation zunächst alle anderen Schlüssel ungültig. Dies ist der einzige Moment, wo der Geheimcode abgehört werden könnte. Jedoch ist praktisch auszuschließen, daß eine nicht berechtigte Person in diesem Moment Zugang zum Schlüssel-Schloß-System hat. Vorteil dieses Verfahrens ist, daß die schlüsselherstellende Werkstatt nun den Geheimcode nicht mehr weiß und somit auch hier keine unberechtigten Personen einen weiteren Ersatzschlüssel anfertigen können.

Über die in der stationären Datenstation enthaltene Software kann der Kraftfahrzeughersteller festlegen, wie der neue Geheimcode generiert wird. Hierzu bestehen mehrere Möglichkeiten.
1.Durch einen echten Zufallsgenerator. Niemand kann danach wissen, wie der neue Geheimcode lautet. Vorteil dieses Verfahrens ist eine sehr hohe Sicherheit. Der Nachteil dieses Verfahrens besteht darin, daß nur ein Ersatzschlüssel gefertigt werden kann, da ab Verwendung des Ersatzschlüssels der Geheimcode niemanden mehr bekannt ist.
2.Durch einen Algorithmus, der z.B. aus dem alten Geheimcode und der alten Identifikation des verlorenen Schlüssels den neuen Geheimcode generiert. Der Vorteil liegt darin, daß der Kraftfahrzeughersteller auch das neue Geheimnis berechnen kann und man für einen evtl. verlorenen Ersatzschlüssel einen neuen Ersatzschlüssel herstellen kann. Der Nachteil besteht darin, daß die Sicherheit theoretisch etwas geringer als bei der ersten Variante ist, weil der Algorithmus zur Geheimcodegenerierung bekannt werden könnte. Jedoch reicht im Normalfall die Kenntnis des alten Geheimcodes auch dann nicht aus, weil die im geschützten Speicherbereich gespeicherte Zufallszahl des verlorenen Schlüssels nicht einmal dem Hersteller des Ersatzschlüssels bekannt ist. Dem Finder des alten Schlüssels sind zwar die Zufallszahl jedoch nicht der Geheimcode bekannt.

Ein Diebstahl eines Kraftfahrzeugs, das mit einem erfindungsgemäßen Schlüssel-Schloßsystem ausgestattet ist, wäre nur denkbar, wenn ein Vertrauter der Ersatzschlüsselwerkstatt den Schlüssel stiehlt, und damit Kenntnis der alten Identifikationsnummer erlangt. Außerdem müßte der Ersatzschlüssel tatsächlich in dieser Werkstatt hergestellt werden und die Programmieranlage angezapft werden, damit der alte Geheimcode bekannt wird. Schließlich müßte der Algorithmus zur Geheimcodegenerierung bekannt sein, nur in diesem Fall könnte die Werkstatt dann einen Schlüssel anfertigen, der von der stationären Datenstation, dem Schloß, als gültiger Ersatzschlüssel erkannt würde. Dieser Fall läßt sich ausschließen, wenn das elektronische Schloß eine nicht auslesbare und individuelle Geheimzahl enthält, die im Algorithmus zur Erzeugung des neuen Geheimcodes verwendet wird.

Da das elektronische Schloß bei diesem Verfahren alle anderen Schlüssel zunächst sperrt, kann in einer Weiterbildung eine Möglichkeit geschaffen werden, diese wieder zu entsperren. Hierzu muß das Kraftfahrzeug mit einem gültigen Schlüssel, z.B. dem neuen Ersatzschlüssel, eingeschaltet werden. Nach dem Abziehen des gültigen Schlüssels kann dann innerhalb einer kurzen Zeit ein anderer zum Kraftfahrzeug gehöriger Schlüssel eingesteckt werden, der dann entsperrt wird, wenn er elektronisch paßt. Auf diese Weise können wieder alle übrig gebliebenen Schlüssel gültig gemacht werden. Falls der Ersatzschlüssel aus Unkenntnis auf die Schlüsselnummer im ersten ungeschützten Speicherbereich eines zuhause liegenden Schlüssels programmiert wurde, bleibt dieser Schlüssel allerdings nutzlos wie der eventuell verlorene Schlüssel.

In einem weiteren Fall sei angenommen, daß die stationäre Datenstation, d.h das elektronische Schloß, sich in der Motorsteuerung befindet, und diese im Reparaturfall ausgewechselt werden muß.

Die Werkstatt muß den Geheimcode aller Schlüssel in das elektronische Schloß der Ersatzmotorsteuerung programmieren. Das ist ohne weiters möglich, weil sich die Geheimcodes jederzeit einprogrammieren, aber nie auslesen lassen. Die Werkstatt erfährt die Geheimcodes von der Ersatzschlüsselzentrale des Kraftfahrzeugherstellers.

Bei der ersten Anwendung der vorhandenen Kraftfahrzeugschlüssel werden diese wie Ersatzschlüssel behandelt, da die Werkstatt die Zufallszahl der einzelnen Schlüssel nicht kennen muß und diese auch nicht im neuen elektronischen Schloß einspeichern kann. Daraufhin werden diese vorhandenen Kraftfahrzeugschlüssel von dem neuen elektronischen Schloß wie Ersatzschlüssel behandelt und es werden neue Geheimnisse von dem neuen elektronischen Schloß generiert und in die Schlüssel geschrieben. Damit werden die neuen Geheimcodes der Werkstatt unbekannt. Dieses Verfahren funktioniert vor allem bei der zweiten Variante der Generierung neuer Geheimcodes, wie oben beschrieben, weil sonst die Beschaffung von Ersatzschlüsseln verhindert wäre.

Es bleibt das geringe Risiko, daß eine auf Betrug ausgelegte Werkstatt sowohl Kenntnis der Identifikationsnummer der Schlüssel wie deren alten Geheimcodes hat und sich bei Kenntnis des Algorithmus zur Generierung der neuen Geheimcodes somit diese errechnen kann. Sie könnte nur dann Schlüssel anfertigen, die vom Kraftfahrzeug als gültige Ersatzschlüssel anerkennt würden. Dieser Fall ist jedoch praktisch auszuschließen.

## Patentansprüche

1. Verfahren zur Zuordnung eines mobilen Datenträgers zu einer stationären Datenstation,
- bei dem der mobile Datenträger geschützte und nicht geschützte Speicherbereiche und Mittel zur Datenübertragung aufweist,
- bei dem die Authentifikation des mobilen Datenträgers in bezug auf die stationäre Datenstation mittels eines Kryptoalgorithmus, der einen im mobilen Datenträger gespeicherten individuellen Geheimcode verwendet, ausgeführt wird,
**dadurch gekennzeichnet, daß**
- in einem schreibgeschützten Speicherbereich des mobilen Datenträgers eine für den mobilen Datenträger individuelle Zahl gespeichert ist,
- in einem beschreibbaren Speicherbereich des mobilen Datenträgers der individuelle Geheimcode des mobilen Datenträgers vor einem Lesen durch die stationäre Datenstation geschützt gespeichert ist,
- in der stationären Datenstation ein erstes Mittel zur Speicherung der individuellen Zahl des mobilen Datenträgers vorgesehen ist und ein zweites Mittel, in dem der individuelle Geheimcode des mobilen Datenträgers gespeichert ist,
- von der stationären Datenstation die Echtheit des mobilen Datenträgers festgestellt wird, wobei die Echtheitsfeststellung durch:
- - Übertragen einer Zahl von der stationären Datenstation zum mobilen Datenträger,
- - Anwenden des Kryptoalgorithmus auf die Zahl in der stationären Datenstation,
- - Anwenden des gleichen Kryptoalgorithmus auf die Zahl im mobilen Datenträger,
- - Übertragung des Ergebnis des Anwendens des gleichen Kryptoalgorithmus auf die Zahl im mobilen Datenträger zur stationären Datenstation,
- - Vergleich der Ergebnisse der Anwendung des Kryptoalgorithmus in der Datenstation mit dem übertragenen Ergebnis der Anwendung des Kryptoalgorithmus im mobilen Datenträger, erfolgt, und ein echter mobiler Datenträger nur bei Übereinstimmung der Ergebnisse vorliegt,
- nur bei Übereinstimmung der vorab verglichenen Ergebnisse von der stationären Datenstation die von der mobilen Datenstation übertragene individuelle Zahl des mobilen Datenträgers mit derjenigen individuellen Zahl auf Übereinstimmung überprüft wird, die in ihrem ersten Mittel gespeichert ist,
- dann, wenn bei der Überprüfung der vom mobilen Datenträger übertragenen individuellen Zahl und der im ersten Mittel gespeicherten individuellen Zahl keine Übereinstimmung festgestellt wird, von der stationären Datenstation ein neuer Geheimcode erzeugt und im zweiten Mittel gespeichert wird und die individuelle Zahl des mobilen Datenträgers im ersten Mittel gespeichert wird und
- der neue Geheimcode an den mobilen Datenträger übermittelt wird und dort in dem vor einem Lesen durch die stationäre Datenstation geschützten beschreibbaren Speicherbereich gespeichert wird.

2. Verfahren nach Anspruch 1,
**dadurch gekennzeichnet, daß** der neue Geheimcode durch einen Zufallsgenerator erzeugt wird.

3. Verfahren nach Anspruch 1,
**dadurch gekennzeichnet, daß** der neue Geheimcode durch einen Algorithmus mittels des alten Geheimcodes und/oder einer Zufallszahl erzeugt wird.

4. Verfahren nach einem der vorhergehenden Ansprüche,
**dadurch gekennzeichnet, daß** der mobile Datenträger einen ungeschützten oder schützbaren Speicherbereich aufweist, in dem ein Code zur individuellen Unterscheidung des mobilen Datenträgertyps gespeichert wird.

5. Verfahren nach einem der vorhergehenden Ansprüche,
**dadurch gekennzeichnet, daß** bei Erkennen eines neuen bisher nicht in der stationären Datenstation gespeicherten mobilen Datenträgers, alle bisherigen bekannten mobilen Datenträger für die Authentifikation gesperrt werden,
- während einer bestimmten vorgebbaren Zeit nach der Authentifikation des neuen Datenträgers, die alten Datenträger durch eine Authentifikation der jeweiligen mobilen Datenträger wieder in der stationären Datenstation entsperrt werden.

## Claims

1. Method for assigning a mobile data carrier to a fixed data station,
- in which the mobile data carrier has protected and unprotected storage areas and data transmission means,
- in which the authentication of the mobile data carrier with respect to the fixed data station is carried out by means of a cryptoalgorithm which uses an individual secret code stored in the mobile data carrier, **characterized in that**
- a number which is specific to the mobile data carrier is stored in a write-protected storage area of the mobile data carrier,
- the individual secret code of the mobile data carrier is stored protected against reading by the fixed data station in a writeable storage area of the mobile data carrier,
- a first means for storing the individual number of the mobile data carrier is provided in the fixed data station, and a second means in which the individual secret code of the mobile data carrier is stored,
- the authenticity of the mobile data carrier is determined by the fixed data station, the authenticity being determined by:
- - transmission of a number from the fixed data station to the mobile data carrier,
- - application of the cryptoalgorithm to the number in the fixed data station,
- - application of the same cryptoalgorithm to the number in the mobile data carrier,
- - transmission of the result of the application of the same cryptoalgorithm to the number in the mobile data carrier to the fixed data station,
- - comparison of the results of the application of the cryptoalgorithm in the data station with the transmitted result of the application of the cryptoalgorithm in the mobile data carrier, a genuine mobile data carrier being present only when the results correspond,
- only if the previously compared results of the fixed data station correspond, is the individual number of the mobile data carrier which is transmitted by the mobile data station checked for correspondence with that individual number which is stored in its first means, then, if no correspondence is determined during the checking of the individual number transmitted by the mobile data carrier and the individual number stored in the first means, a new secret code is generated by the fixed data station and stored in the second means, and the individual number of the mobile data carrier is stored in the first means, and
- the new secret code is transmitted to the mobile data carrier and is stored there in the writeable memory area which is protected against being read by the fixed data station.

2. Method according to Claim 1, **characterized in that** the new secret code is generated by a random generator.

3. Method according to Claim 1, **characterized in that** the new secret code is generated by an algorithm by means of the old secret code and/or a random number.

4. Method according to one of the preceding claims, **characterized in that** the mobile data carrier has an unprotected or protectable memory area in which a code for individually differentiating the type of mobile data carrier is stored.

5. Method according to one of the preceding claims, **characterized in that** when a new mobile data carrier which was previously not stored in the fixed data station is detected, all the previous known mobile data carriers are blocked for authentication,
- during a specific predefinable time after the authentication of the new data carrier, the old data carriers are unblocked again in the fixed data station by authentication of the respective mobile data carriers.

## Revendications

1. Procédé d'association d'un support mobile de données à un poste fixe de données,
- dans lequel le support mobile de données a des parties de mémoire qui sont protégées et des parties qui ne sont pas protégées et des moyens de transmission de données,
- dans lequel l'authentification du support. mobile de données est réalisée par rapport au poste fixe de données au moyen d'un crypto-algorithme qui utilise un code individuel secret mémorisé dans le support mobile de données,
**caractérisé en ce que**
- il est mémorisé dans une partie de la mémoire protégée vis-à-vis de l'écriture du support mobile de données un nombre propre au support mobile de données,
- il est mémorisé dans une partie de mémoire dans laquelle on peut écrire du support mobile de données le code secret propre du support mobile de données avant une lecture par le poste fixe de données,
- il est prévu dans le support mobile de données un premier moyen de mémorisation du nombre propre au support mobile de données et un deuxième moyen dans lequel le code secret propre au support mobile de données est mémorisé,
- il est constaté par le poste fixe de données l'authenticité du support mobile de données, la constatation d'authenticité s'effectuant par :
- transmission d'un nombre du poste fixe de données au support mobile de données,
- utilisation du crypto-algorithme sur le nombre dans le poste fixe de données,
- utilisation du même crypto-algorithme sur le nombre dans le support mobile de données,
- transmission du résultat de l'utilisation du même crypto-algorithme sur le nombre dans le support mobile de données au poste fixe de données,
- comparaison des résultats d'utilisation du crypto-algorithme dans le poste de données aux résultats transmis de l'utilisation du crypto-algorithme dans le support mobile de données et présence d'un support mobile de données authentique seulement en cas de coïncidence des résultats,
- seulement en cas de coïncidence des résultats comparés précédemment, le nombre propre au support mobile de données est transmis par le poste mobile de données et vérifié du point de vue de la concordance avec le nombre propre qui est mémorisé dans son premier moyen,
- ensuite s'il n'et pas constaté à la vérification de concordance du nombre propre transmis par le support mobile de données et du nombre propre mémorisé dans le premier moyen, il est produit par le poste fixe de données un nouveau code secret qui est mémorisé dans le deuxième moyen et le nombre propre au support mobile de données est mémorisé dans le premier moyen et
- le nouveau code secret est transmis au support mobile de données et y est mémorisé dans la partie de la mémoire dans laquelle on peut écrire et qui est protégée d'une lecture par le poste fixe de données.

2. Procédé suivant la revendication 1,
**caractérisé en ce que** l'on produit le nouveau code secret par un générateur de nombres aléatoires.

3. Procédé suivant la revendication 1,
**caractérisé en ce que** l'on produit le nouveau code secret par un algorithme au moyen de l'ancien code secret et/ou d'un nombre aléatoire.

4. Procédé suivant l'une des revendications précédentes,
dans lequel le support mobile de données a une partie de la mémoire qui n'est pas protégée ou qui peut être protégée, dans laquelle est mémorisé un code de distinction propre du type de support mobile de données.

5. Procédé suivant l'une des revendications précédentes,
**caractérisé en ce que**, lorsqu'un nouveau support mobile de données, qui n'était pas mémorisé jusqu'ici dans le poste fixe de données, est reconnu, tous les supports mobiles de données connus jusqu'ici sont bloqués à l'authentification,
- par le fait que pendant un certain temps, qui peut être prescrit après l'authentification du nouveau support de données, les anciens supports de données sont redébloqués dans le poste fixe de données par une authentification du support mobile de données respectif.
